## Europäisches Patentamt

## European Patent Office

## Office européen des brevets

(11) Publication number: **0 122 007 B1**

(12) **EUROPEAN PATENT SPECIFICATION**

(45) Date of publication of the patent specification: **16.07.86**

(51) Int. Cl.⁴: **H 04 L 11/16, H 04 B 1/74**

(21) Application number: **84301382.2**

(22) Date of filing: **02.03.84**

(54) Loop transmission system.

(30) Priority: **03.03.83 JP 35448/83**

(43) Date of publication of application:
**17.10.84 Bulletin 84/42**

(45) Publication of the grant of the patent:
**16.07.86 Bulletin 86/29**

(84) Designated Contracting States:
**DE FR**

(56) References cited:
**FR - A - 2 465 374**
**GB - A - 2 067 056**

**ELECTRONICS AND COMMUNICATIONS IN JAPAN, vol. 60-A, no. 3, March 1977, pages 18-27, Scripa Publishing Co., Washington, US M. AKIYAMA et al.: "Reliability of loop communication networks"**

(73) Proprietor: **Kawasaki Jukogyo Kabushiki Kaisha, 1-1 Higashikawasaki-cho 3-chome, Chuo-ku Kobe-shi Hyogo-ken (JP)**

(72) Inventor: **Ishida, Takeshi, 1-4-453, Izumigaoka-3-chome Tarumi-ku, Kobe (JP)**

(74) Representative: **Nettleton, John Victor et al, Abel & Imray Northumberland House 303-306 High Holborn, London, WC1V 7LH (GB)**

ACTORUM AG

## Description

The present invention relates to a loop transmission system constituting a multiplex redundant system used for effecting management of a train service or for controlling facilities in a factory.

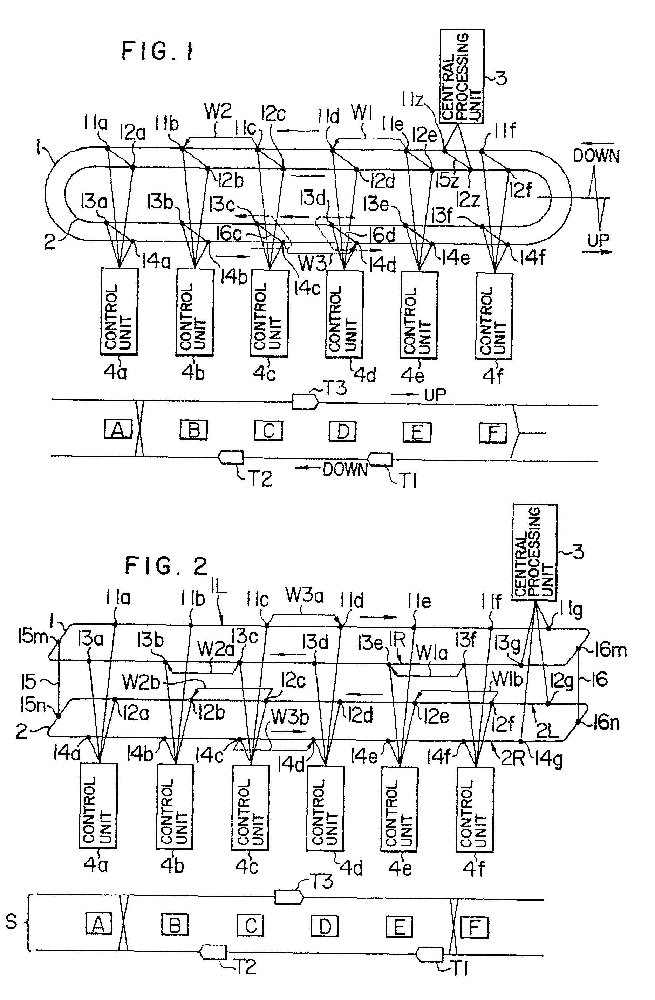

According to a typical prior art, as shown in Fig. 1, control units 4a to 4f are connected to two ring-shaped loop transmission lines 1 and 2 via transmission units 11a to 11f, 12a to 12f, 13a to 13f and 14a to 14f. The transmission units 11a to 11f, 12a to 12f, 13a to 13f, and 14a to 14f are connected to loop transmission lines 1 and 2. Each of the transmission units 11a to 11f on the loop transmission line 1 is connected to corresponding one of the transmission units 12a to 12f on the loop transmission line 2, and similarly each of the transmission units 13a to 13f on the loop transmission line 2 is connected to corresponding one of the transmission units 14a to 14f on the loop transmission line 1. To each of up-lines and down-lines of the duplicated loop transmission lines 1 and 2, the control units 4a to 4f respectively associated with train stations A to F are connected for effecting management of a train service. The up/down directions are coincident with transmission directions of the loop transmission lines 1 and 2. Thus, half circumferences of loop transmission lines 1 and 2 are used for up-lines and the remaining half circumferences are used for down-lines. A central processing unit 3 is coupled to the loop transmission lines 1 and 2 via transmission units 11z and 12z, respectively. The central processing unit 3 may be located at any suitable place along the loop transmission lines 1 and 2.

As described above, transmission directions of the duplicated loop transmission lines 1 and 2 are coincident with up/down track direction of the train service. Consequently, when a failure occurs at any point on the loop transmission line 1 or 2 to make unable to perform the loop transmission of information, a problem as described below is caused. For example, assume that a break happens accidentally in a section W3 located between the train stations C and D, which belongs to an up-line section of the loop transmission line 1. In this case, a signal on the loop transmission line 1 cannot pass through the broken section W3. Therefore, two loop transmission lines 1 and 2 are connected to each other through connection lines 16c and 16d which respectively connects the transmission units 13c and 14c, and 13d and 14d, to form alternative paths for signal transmission as represented by the doted lines. In this case, departure information concerning a train T3 to be transmitted from the train station C to the train station D over the shortest distance is transmitted from the control unit 4c to the control unit 4d through transmission units 14c, 13c, 13b, 13a, 12a, 12b, 12c, 12d, 12e, 12f, 12z, 12f, 13f, 13e, 13d and 14d. Consequently, the departure information is considerably delayed in its transmission.

In the prior art system illustrated in Fig. 1, the loop transmission lines 1 and 2 are divided to be used for the up-lines and down-lines. This division

necessitates control operation. In addition to complicated configuration, therefore, the control program also becomes complicated.

Another problem of such a prior art system concerns efficient use of facilities. Although the dual redundant systems are constituted by the loop transmission lines 1 and 2, one of the systems is always lying idle in the normal operation. Thus, too many facilities are required to cope with a rare accident. In addition, should simultaneous failures happen at two points, the function of all the loop transmission system is interrupted. For example, should a break accident happen in the down-line section W2 of the transmission line 1 in addition to the above described break in the up-line section W3 located between the train stations C and D of the loop transmission line 1, the information cannot be transmitted through a ring form line because the information transmission is unidirectional. As a result, the transmission function is suspended. This holds true for simultaneous occurrences of a failure between the train stations C and D and another failure on the section W1 between the train stations D and E.

Furthermore, in the prior art system, it is necessary to provide connection lines for alternative routing such as 16c and 16d, for respective transmission units 11a to 11f, 12a to 12f, 13a to 13f, and 14a to 14f. This results in the complicated configuration and an increased cost. In addition, the prior art system cannot cope with simultaneous failures caused at a plurality of points at all as described above, resulting in a fragile and insufficient redundant system.

The object of the present invention is to provide a loop transmission system which causes no transmission delay and can satisfactorily cope with failures occurred at a plurality of points in spite of the simple configuration.

In accordance with the present invention, on each of dual loop transmission lines, two or more pairs of transmission units for control units are provided. The transmission direction on one of the duplicated loop transmission lines is the same as or opposite to that on the other of the duplicated loop transmission lines. A pair of transmission units on one of the dual loop transmission lines and a corresponding pair of transmission units on the other of the dual loop transmission lines are connected to a control unit. In addition, two loop-line portions respectively located between two pairs of transmission units on one of the duplicated loop transmission lines are respectively connected to two corresponding loop-line portions on the other of the duplicated loop transmission lines by using compensation transmission units. Further, the remaining loop-line portions of the loop transmission lines excepting the above described loop-line portions may be coupled or crosscoupled by using a second group of compensation transmission units.

In such a configuration, an alternative path can be constituted via transmission units by using two or four connection lines coupling two loop transmission lines. Accordingly, the length of the alternative path can be made substantially equal to the original loop transmission length, formation of a significantly long transmission path being prevented.

On the duplicated loop transmission lines, the same information is always transmitted. Therefore, the information is interchanged between a central processing unit and control units or between control units via transmission units. The information transmitted through one loop transmission line is the same as that transmitted through the other loop transmission line. However, the information received later can be used to determine whether the information received first is right or not. Or the information received later may be neglected.

Should a particular point on the loop transmission line be broken due to an accident or the like, the function of the loop transmission line thus broken can be suspended or sound parts of the two loop transmission lines can be connected by using the connection lines to form an alternative path. Thereby, the broken part of the loop transmission line is excluded. The length of the alternative path is nearly equal to one loop length. Since a long alternative route is not formed, the transmission delay is not significantly increased. Further, it becomes possible to fully cope with a failure without the necessity for a complicated control program.

The present invention will become apparent from the following detailed description made in conjunction with the accompanying drawings in which:

Fig. 1 is a schematic diagram of the prior art;

Fig. 2 is a schematic diagram of an embodiment of the present invention;

Fig. 3 is a schematic diagram for illustrating the operation of a transmission unit 11a for a control unit;

Fig. 4 is a schematic diagram for illustrating the operation of the embodiment of the present invention illustrated in Fig. 2;

Fig. 5 is a schematic diagram of another embodiment of the present invention;

Figs. 6a to 6d are schematic diagrams for illustrating the operation of the embodiment of the present invention illustrated in Fig. 5;

Fig. 7 is a schematic diagram of still another embodiment of the present invention; and

Figs. 8a to 8d are schematic diagrams for illustrating the operation of the embodiment of the present invention illustrated in Fig. 7.

Fig. 2 shows an embodiment of the present invention. This loop transmission system is used for management and control of train service. Loop transmission lines 1 and 2 arranged in duplicate are located to achieve management and control of a train service in which trains $T_1$-$T_3$ are shown on train tracks S. Control units 4a to 4f each of which including a computer and the like are located corresponding to train stations A to F, respectively. The information transmission direction on a half-circumference 1L of the loop transmission line 1 is opposite to that on a corresponding half-circumference 2L of the loop transmission line 2. And the information transmission direction on the other half-circumference 1R of the loop transmission line 1 is opposite to that on the other half-circumference 2R of the loop transmission line 2. Paired transmission units 11a and 13a associated with the control unit 4a are connected to the loop transmission line 1. In the same way, paired transmission units 11b and 13b, 11c and 13c, 11d and 13d, 11e and 13e, 11f and 13f, and 11g and 13g respectively associated with control units 4b, 4c, 4d, 4e, 4f and a central processing unit 3 are connected to the loop transmission line 1. Pairs of transmission units 12a and 14a, 12b and 14b, 12c and 14c, 12d and 14d, 12e and 14e, 12f and 14f, and 12g and 14g respectively associated with the control units 4a, 4b, 4c, 4d, 4e, 4f and the central processing unit 3 are connected to the loop transmission line 2. Hence the paired transmission units 11a and 13a correspond to the paired transmission units 12a and 14a, and the transmission units 11a, 12a, 13a and 14a are connected to the control unit 4a.

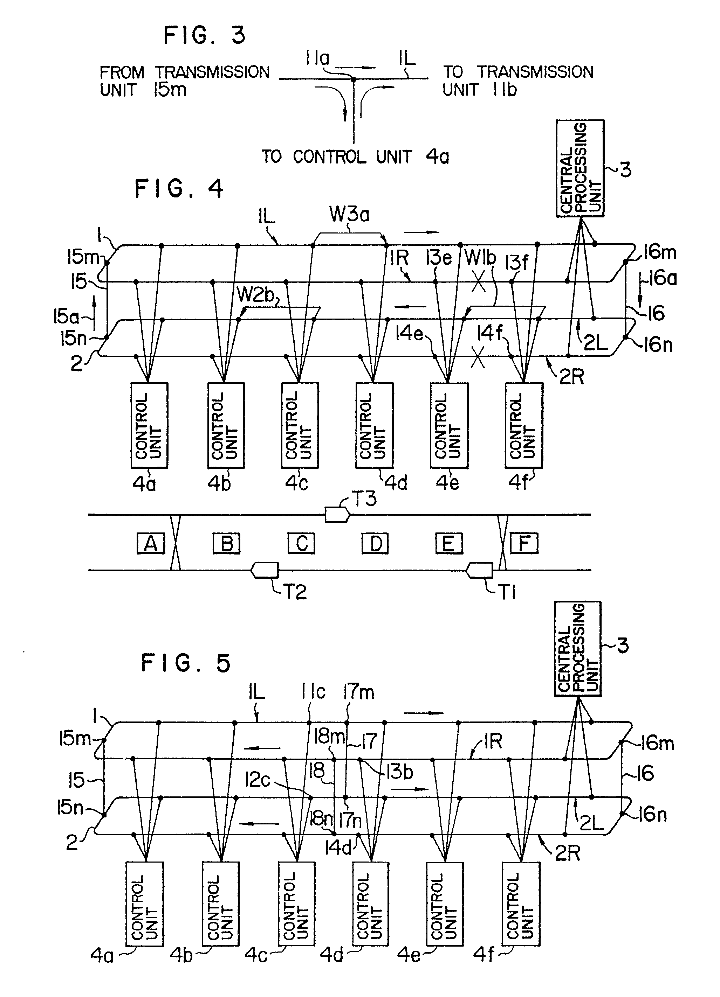

Fig. 3 shows transmission directions associated with the transmission unit 11a. It is also applicable to other transmission units. The transmission unit 11a transmits information on the transmission line 1L in one direction. In addition, the transmission unit 11a supplies the information to the control unit 4a and introduces information fed from the control unit 4a onto the part 1L of the loop transmission line 1. The central processing unit 3 comprising a computer is connected to the loop transmission lines 1 and 2 via the transmission units 11g to 14g (Fig. 2).

A compensation transmission unit 15m is connected to a portion of the loop transmission line 1 between the transmission units 11a and 13a which are connected to the control unit 4a. Similarly, a compensation transmission unit 15n is connected to a portion of the loop transmission line 2 between the transmission units 12a and 14a which are connected to the control unit 4a. The compensation transmission units 15m and 15n connect the loop transmission lines 1 and 2 with each other via a connection line 15. In the same way, a portion of the loop transmission line 1 between the transmission units 11g and 13g is connected to a portion of the loop transmission line 2 between the transmission units 12g and 14g via compensation transmission units 16m and 16n as well as a connection line 16. By using the connection lines 15 and 16, it is possible to connect the loop transmission lines 1 and 2 with each other to transmit the information through an alternative path. The compensation transmission units 15m and 15n must be placed at such positions that any alternative path constituted may pass through transmission units associated with all the control units.

On both of the two loop transmission lines, the same information is transmitted. The central processing unit 3 and the control units 4a to 4f send and receive the information to and from the two loop transmission lines 1 and 2. The information is distributed by a series of transmission units 11a to 11g, 12a to 12g, 13a to 13g, and 14a to 14g.

For effecting the management and control of train service, the information must be exchanged between the central processing unit 3 and the control units 4a to 4f which are respectively installed at the train stations A to F, and the departure information concerning trains T1, T2 and T3 which have already started must be transmitted from starting train stations to respective next train stations. In the present invention, the departure information is sent simultaneously onto the two loop transmission lines 1 and 2, and the control unit of the next train station can receive the same information over the shortest distances of the loop transmission lines 1 and 2. In the embodiment of the present invention as illustrated in Fig. 2, the information is transmitted clockwise on the loop transmission line 1 and the information is transmitted counterclockwise on the loop transmission line 2. The departure information of the train T1 is transmitted from the control unit 4f to the control unit 4e through the transmission units 12f and 12e, the shortest distance W1b on the loop transmission line 2. The departure information of the train T1 is also transmitted from the control unit 4f to the control unit 4e through the transmission units 13f and 13e, the shortest distance W1a on the loop transmission line 1. In the same way, the departure information of the train T2 is transmitted from the control unit 4c to the control unit 4b through the transmission units 12c and 12b, the shortest distance W2b, while the information is transmitted from the control unit 4c to the control unit 4b through the transmission units 13c and 13b, the shortest distance W2a. The departure information of the train T3 is also transmitted from the control unit 4c to the control unit 4d through the transmission units 14c and 14d, the shortest distance W3b, while the information is transmitted from the control unit 4c to the control unit 4d through the transmission units 11c and 11d, the shortest distance W3a. The information passed through the line section W1a, W2a, or W3a is received at a time different from that of the information passed through the line section W1b, W2b, or W3b because of different transmission timing. Therefore, it is possible to use the information received later to check the information received first or to neglect the information received later. For the periodic inspection or maintenance of the loop transmission lines 1 and 2 as well as transmission units 11a to 11f, 12a to 12f, 13a to 13f, and 14a to 14f, one of the loop transmission lines 1 and 2 can be interrupted.

Assuming now that the loop transmission line 1 is broken in the section W1a located between the transmission units 13e and 13f, the function of the loop transmission line 1 is suspended but the loop transmission line 2 is sound. Therefore, the loop transmission line 2 can perform the function of the loop transmission line 1 and can transmit and receive the information in the same way as the loop transmission line 1. That is to say, the loop transmission function is not hampered and the management and control of train service is not suspended.

Fig. 4 is a schematic diagram for illustrating the operation of the embodiment of the present invention illustrated in Fig. 2. The loop transmission

lines 1 and 2 are often installed close to each other. Accordingly, it is probable that the loop transmission lines 1 and 2 are simultaneously broken. Suppose now that both the section between the transmission units 13e and 13f and the section between the transmission units 14e and 14f are broken. Then the loop transmission lines 1 and 2 are connected to each other through the compensation transmission units 15m and 15n as well as the connection line 15 and through the compensation transmission units 16m and 16n as well as the connection line 16 to form an alternative path. Since the information transmission direction of the loop transmission line 1 is opposite to that of the loop transmission line 2, such an alternative path can be constituted. The length of this alternative path is nearly equal to the length of one round of the loop transmission line 1 or 2, which is nearly equal to the length in normal operation. In addition, the number of transmission units involved in the information transmission is not largely increased. Therefore, the transmission delay is not largely increased as compared with the normal state.

In the embodiment illustrated in Fig. 2, even if halves 1R and 2R of the loop transmission lines 1 and 2 do not function at all, the departure information concerning the trains T1, T2 and T3 can be transmitted to respective next train stations by using only remaining halves 1L and 2L of the loop transmission lines 1 and 2. Moreover, the central processing unit 3 and the control units 4a to 4f can exchange the information with each other without hindrance. When the function of one of the loop transmission lines 1 and 2 is impaired, connection switching is not required in the embodiment. Only when two loop transmission lines 1 and 2 are simultaneously broken, that fact is detected and an alternative path comprising the connection lines 15 and 16 is constituted by the function of the compensation transmission units 15m, 15n, 16m and 16n. Accordingly, the loop transmission unit can be easily controlled.

The operation when halves 1R and 2R of the loop transmission lines 1 and 2 are broken has heretofore been described by referring to Fig. 4 (some of the reference numerals similar to that in Fig. 2 are omitted for the sake of simplicity). When halves 1L and 2L of the loop transmission lines 1 and 2 are broken, an alternative path having the opposite transmission direction is constituted. The information transmission directions on the connection lines 15 and 16 are then opposite to directions represented by the arrows 15a and 16a in Fig. 4. Control of such transmission directions is carried out by the compensation transmission units 15m, 15n, 16m and 16n. The loop transmission system is so configured that the transmission operation and the transmission direction are automatically controlled.

Fig. 5 is a schematic diagram of another embodiment of the present invention. The same components as those used in the foregoing embodiments are attached with like reference numerals (some are omitted). The transmission direction on the loop transmission line 1 is the same as that on the loop transmission line 2. Remaining parts of the loop transmission lines 1 and 2 excepting the above described portions of the loop transmission lines whereto the compensation transmission units 15m, 15n, 16m and 16n are connected are connected together through connection lines 17 and 18 by compensation transmission units 17m, 17n, 18m and 18n. In this embodiment of the present invention, the information transmission can be continued even if failures such as breaks occur in portions having transmission directions opposing each other of the two loop transmission lines 1 and 2 such as halves 1L and 2R or halves 1R and 2L. The transmission directions of the loop transmission lines 1 and 2 are clockwise as illustrated in Fig. 5. And the nearly control point or midpoint of the half-circumference 1L is connected to the nearly central point of the half-circumference 2L via the above described connection line 17. The nearly central point of the half-circumference 1R is connected to the nearly central point of the half-circumference 2R via the above described connection line 18.

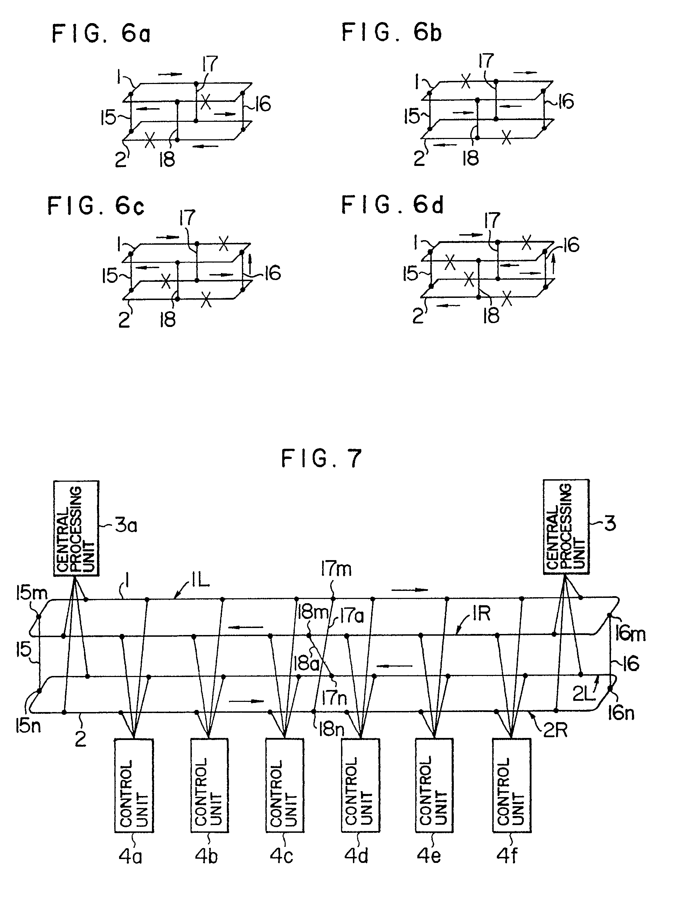

In the embodiment illustrated in Fig. 5, the information can be transmitted as represented by the arrows in Figs. 6a to 6d even if two or more failures such as breaks simultaneously occur at points represented by marks X in Figs. 6a to 6d. Thus, the function of the loop transmission lines 1 and 2 is not suspended due to the breaks or the like. In this way, even when failures occur at several points of the loop transmission lines 1 and 2, sound portions of the loop transmission lines 1 and 2 are connected to each other to form an alternative path. The distance over which the information is transmitted is close to that in the normal state. In addition, this embodiment can be simply configured without causing a significant transmission delay.

The information exchange between the central processing unit 3 and each of control units 4a to 4f and the information exchange between the control units 4a to 4f are carried out in the same way as the embodiments illustrated in Fig. 2 and Fig. 4.

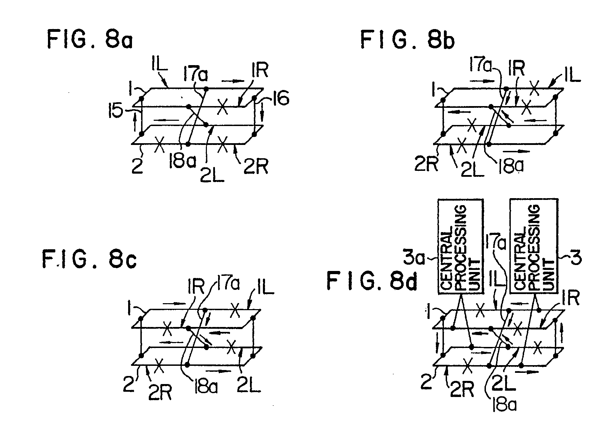

Fig. 7 is a schematic diagram of still another embodiment of the present invention. In this embodiment of the present invention, the remaining parts of the loop transmission lines 1 and 2 excepting the line portions described before whereto the compensation transmission units 15m, 15n, 16m and 16n are connected are crosscoupled through connection lines 17a and 18a by second group of compensation transmission units 17m, 18n, 18m and 17n. In this embodiment, another central processing unit 3a which has a structure similar to that of the central processing unit 3 is also provided. This embodiment can cope with failures with which any embodiments illustrated in Figs. 2 to 6 could not cope. For example, this embodiment can cope with simultaneous failures on the same halves of the loop transmission lines 1 and 2 such as 1R and 2R or simultaneous failures on the different halves such as 1L and 2R. The information transmission under various failures is illustrated in Figs. 8a to 8d. When failures such as breaks occur at points represented by the marks X, the information is transmitted over a path represented by the arrows, the function of the information transmission being prevented from suspension. In Fig. 8a, the connection lines 15 and 16 are used. In Fig. 8b and Fig. 8c, the connection lines 17a and 18a are used. Fig. 8d shows that the information exchange can be carried out by using the central processing units 3 and 3a.

Thus, there is provided a redundancy which is large enough to maintain the information transmission function even when simultaneous failures occur at a plurality of points on the loop transmission lines 1 and 2. The embodiments heretofore described eliminated the problem that the function of the information is suspended upon occurrence of failures such as breaks of the loop transmission lines at two different points. In addition, the configuration is simple.

As described above, in the present invention, a redundant system for the loop transmission lines can be constituted with a simplified configuration and without execution of a complicated control program. Since the function is not hampered by a failure caused on only either one of the loop transmission lines, high tolerance is given to the periodic inspection and the maintenance. Thus, while one of the transmission lines is being suspended, the periodic inspection or the maintenance can be carried out. Further, an alternative path is formed only when failures occur on the two loop transmission lines. Accordingly, a complicated control program or detection of details concerning the failures is not required. When the information is transmitted over a newly constituted alternative path, the length of the path is nearly equal to one circumference of the loop transmission line 1 or 2. That is to say, the length of the transmission path is nearly reduced to half as compared with the prior art described before. Further, according to the present invention, the number of transmission units involved in the alternative transmission path is nearly equal to that in the normal state. Accordingly, the transmission delay is not significantly increased during the presence of a failure.

## Claims

1. A loop transmission system comprising:
   duplicated first and second loop transmission lines (1, 2);
   first and second pairs of transmission units (11a, 13a; 11b, 13b; ... 11g, 13g; and 12a, 14a; 12b, 14b; ... 12g, 14g), said first pair of transmission units (11a, 13a; ... 11g, 13g) being connected to said first loop transmission line (1), said second pair of transmission units (12a, 14a; ... 12g, 14g) being connected to said second loop transmission line (2), transmission directions of said first and second loop transmission lines (1, 2) being opposite or the same with each other;
   a control unit (4a, 4b, ... 4f) and a central processing unit (3) connected to said first and second pairs of transmission units (11a, 13a; ...

11g, 13g and 12a, 14a; ... 12g, 14g) ; characterized in that the system comprises

first and second pairs of compensation transmission units (15m, 15n and 16m, 16n), said first pair of compensation transmission units (15m, 15n) being connected to corresponding line portions of said first and second loop transmission lines (1, 2) on one side of said first and second pairs of transmission units (11a, 13a and 11g, 13g), said second pair of compensation transmission units (16m, 16n) being respectively connected to corresponding line portions of said first and second loop transmission lines (1, 2) on the other side of said second pairs of transmission units (11a, 13a; 12a, 14a); and

connecting lines (15, 16) respectively connected between said first and second pairs of compensation transmission units (15m, 15n and 16m, 16n) thereby to connect said first and second loop transmission lines (1, 2) with each other.

2. A loop transmission system according to Claim 1, further comprising respectively on said first and second loop transmission lines (1, 2) third and fourth pairs of compensation transmission units (17m, 18m; 17n, 18n) for coupling or cross-coupling said first and second loop transmission lines (1, 2) by connection lines (17, 18) respectively.

## Patentansprüche

1. Ringübertragungssystem mit

gedoppelten ersten und zweiten Ringübertragungsleitungen (1, 2),

ersten und zweiten Paaren von Übertragungseinheiten (11a, 13a; 11b, 13b; ... 11g, 13g; und 12a, 14a; 12b, 14b; ... 12g, 14g), wobei das erste Paar von Übertragungseinheiten (11a, 13a; ... 11g, 13g) mit der ersten Ringübertragungsleitung (1) verbunden ist und das zweite Paar von Übertragungseinheiten (12a, 14a; ... 12g, 14g) mit der zweiten Ringübertragungsleitung (2) verbunden ist, wobei die Übertragungsrichtungen der ersten und der zweiten Ringübertragungsleitung (1, 2) zueinander entgegengesetzt sind,

einer Steuereinheit (4a, 4b, ... 4f) und einer Zentraleinheit (3), die mit den ersten und zweiten Paaren von Übertragungseinheiten (11a, 13a; ... 11g, 13g und 12a, 14a; ... 12g, 14g) verbunden sind, dadurch gekennzeichnet, dass das System umfasst:

erste und zweite Paare von Kompensationsübertragungseinheiten (15m, 15n und 16m, 16n), wobei das erste Paar von Kompensationsübertragungseinheiten (15m, 15n) mit den entsprechenden Leitungsteilen der ersten und zweiten Ringübertragungsleitung (1, 2) auf einer Seite der ersten und der zweiten Paare von Übertragungseinheiten (11a, 13a und 11g, 13g) verbunden ist, wobei das zweite Paar von Kompensationsübertragungseinheiten (16m, 16n) jeweils mit den entsprechenden Leitungsteilen der ersten und der zweiten Ringübertragungsleitung (1, 2) an der anderen Seite der zweiten Paare von Übertragungseinheiten (11a, 13a; 12a, 14a) verbunden ist, und

Verbindungsleitungen (15, 16), die jeweils zwischen die ersten und zweiten Paare von Kompensationsübertragungseinheiten (15m, 15n und 16m, 16n) geschaltet sind, um damit die erste und die zweite Ringübertragungsleitung (1, 2) miteinander zu verbinden.

2. Ringübertragungssystem nach Anspruch 1, welches weiter jeweils auf den ersten und den zweiten Ringübertragungsleitungen (1, 2) dritte und vierte Paare von Kompensationsübertragungseinheiten (17m, 18m; 17n, 18n) aufweist, um die erste und die zweite Ringübertragungsleitung (1, 2) über Verbindungsleitungen (17, 18) jeweils zu koppeln oder kreuzzukoppeln.

## Revendications

1. Système de transmission en boucle, comprenant :

une première et une seconde ligne de transmission jumelées (1, 2) ;

une première et une seconde paire d'unités de transmission (11a, 13a; 11b, 13b; ... ; 11g, 13g; et 12a, 14a; 12b, 14b; ... ; 12g, 14g), la première paire d'unités de transmission (11a, 13a; ... ; 11g, 13g) étant raccordée à la première ligne de transmission en boucle (1), la seconde paire d'unités de transmission (12a, 14a; ... ; 12g, 14g) étant raccordée à la seconde ligne de transmission en boucle (2), les sens de transmission de la première et de la seconde ligne de transmission en boucle (1, 2) étant opposés l'un à l'autre ou étant les mêmes ;

une unité de commande (4a, 4b-4f) et une unité centrale (3) raccordées à la première et à la seconde paire d'unités de transmission (11a, 13a-11g, 13g et 12a, 14a-12g, 14g), caractérisé en ce que le système comprend :

une première et une seconde paire d'unités de transmission compensatrices (15m, 15n et 16m, 16n), la première paire d'unités de transmission compensatrices (15m, 15n) étant raccordée à des tronçons de ligne correspondants de la première et de la seconde ligne de transmission en boucle (1, 2) d'un côté de la première et de la seconde paire d'unités de transmission (11a, 13a et 11g, 13g) et la seconde paire d'unités de transmission compensatrices (16m, 16n) étant raccordée à des tronçons de ligne correspondants de la première et de la seconde ligne de transmission en boucle (1, 2) respectivement, de l'autre côté de la première et de la seconde paire d'unités de transmission (11a, 13a; 12a, 14a) ; et

des lignes de jonction (15, 16) montées respectivement entre la première et la seconde paire d'unités de transmission compensatrices (15m, 15n et 16m, 16n), de manière à raccorder l'une à l'autre la première et la seconde ligne de transmission en boucle.

2. Système de transmission en boucle selon la revendication 1, comprenant en outre, respectivement sur la première et la seconde ligne de transmission en boucle (1, 2), une troisième et une quatrième unité de transmission compensatrices (17m, 18m; 17n, 18n) pour le couplage ou le couplage en croix de la première et de la seconde ligne de transmission en boucle (1, 2) par des lignes de jonction (17, 18) respectivement.

# FIG. 1

CENTRAL PROCESSING UNIT 3

CONTROL UNIT 4a
CONTROL UNIT 4b
CONTROL UNIT 4c
CONTROL UNIT 4d
CONTROL UNIT 4e
CONTROL UNIT 4f

DOWN
UP

T3
UP

A   B   C   D   E   F

T2   DOWN   T1

# FIG. 2

CENTRAL PROCESSING UNIT 3

CONTROL UNIT 4a
CONTROL UNIT 4b
CONTROL UNIT 4c
CONTROL UNIT 4d
CONTROL UNIT 4e
CONTROL UNIT 4f

T3

S { A   B   C   D   E   F

T2   T1

# FIG. 3

FROM TRANSMISSION
UNIT 15m

TO TRANSMISSION
UNIT 11b

TO CONTROL UNIT 4a

# FIG. 4

CONTROL UNIT 4a
CONTROL UNIT 4b
CONTROL UNIT 4c
CONTROL UNIT 4d
CONTROL UNIT 4e
CONTROL UNIT 4f

A   B   C   D   E   F

T3   T2   T1

CENTRAL PROCESSING UNIT 3

# FIG. 5

CONTROL UNIT 4a
CONTROL UNIT 4b
CONTROL UNIT 4c
CONTROL UNIT 4d
CONTROL UNIT 4e
CONTROL UNIT 4f

CENTRAL PROCESSING UNIT 3

FIG. 6a

FIG. 6b

FIG. 6c

FIG. 6d

FIG. 7

FIG. 8a

FIG. 8b

FIG. 8c

FIG. 8d

CENTRAL PROCESSING UNIT

CENTRAL PROCESSING UNIT